Europäisches Patentamt

European Patent Office

Office européen des brevets

(11) Publication number: **0 403 680 B1**

# EUROPEAN PATENT SPECIFICATION

(45) Date of publication of patent specification: **09.03.94**  (51) Int. Cl.⁵: **G01N 30/88**, G01N 30/34

(21) Application number: **89111420.9**

(22) Date of filing: **23.06.89**

(54) **Apparatus and method for optimizing the liquid chromatographic separation of a sample.**

(43) Date of publication of application:
**27.12.90 Bulletin 90/52**

(45) Publication of the grant of the patent:
**09.03.94 Bulletin 94/10**

(84) Designated Contracting States:
**CH DE FR GB LI NL**

(56) References cited:
**EP-B- 0 175 925**

**ADVANCES IN INSTRUMENTATION, vol. 41, part 1, 1986, pages 383-402; R. ANNINO et al.: "A computer aided optimization program including stationary phase selection and optimized analysis conditions"**

**TrAC, vol. 6, no. 5, May 1987, pages 106-111; L.R. SNYDER et al.: "High-performance liquid chromatographic method-development using computer simulation"**

**MICROPROCESSORS AND MICROSYSTEMS, vol. 7, no. 1, January-February 1983, pages 19-23; J.C. BERRIDGE: "Using a microprocessor in high performance liquid chromatography"**

(73) Proprietor: **Hewlett-Packard GmbH**
**Postfach 14 30**
**D-71004 Böblingen(DE)**

(72) Inventor: **Drouen, Antonius**
**Esternaystrasse 74**
**D-7517 Waldbronn(DE)**

# Description

The invention relates to an apparatus and a corresponding method for optimizing the liquid chromatographic separation of a sample with respect to an optimization parameter, for example the composition of the mobile phase.

In the analytical method of liquid chromatography, a sample to be analysed is injected together with a suitable solvent (mobile phase) into a separation column, typically under very high pressure. The various components of the sample interact differently with the column material and the solvent such that the components elute from the column at different times. The substances leaving the column are subsequently detected by a detector, for example by a photometric detector. The time between the injection of a sample and the detection of a specific component is called the retention time for that component. The result of a chromatographic separation, the chromatogram, is displayed as a plot of detector signal versus time. A chromatogram typically comprises a plurality of peaks, wherein each peak corresponds to a certain component of the sample to be analysed. The area of the peak is characteristic for the amount of the respective component present in the sample.

In order to ensure a reliable qualitative and quantiative analysis of the sample, it is necessary that the chromatogram has a good overall resolution, that means that the peaks of the different components are well separated and that their width is comparatively small. In chromatograms with bad overall resolution, it may occur that adjacent peaks are not resolved so that one can neither recognize that these peaks actually correspond to different sample components nor can one derive meaningful quantitative values. It is known that the overall resolution of a chromatogram for a specific sample depends on the composition of the mobile phase and that by variation of this composition, for example by blending several solvents in a certain ratio, an improvement of this resolution can be achieved.

Various methods have been suggested for optimizing the liquid chromatographic separation of a sample, whereby much effort has been spent on methods of finding the mobile phase composition resulting in optimal separations.

A method and a corresponding apparatus for the automatic optimization of liquid chromatography separations is known from Microprocessors and Microsystems, Vol.7, No.1, January-February 1983, pages 19-23; J.C. Berridge: "Using a microprocessor in high performance liquid chromatography". This known method uses a simplex optimization procedure wherein a multidimensional sequential search algorithm is applied to locate an experimental optimum for a liquid chromatographic separation.

A method for computer aided optimization in gas chromatography is known from Advances in Instrumentation, Vol. 41, part 1, 1986 pages 383-402; R. Annino et al.: "A computer aided optimization program including stationary phase selection and optimized analysis conditions". In this method, certain parameters which are of interest in a gas chromatographic separation are calculated on the basis of theoretical models. It is also possible for a user to select conditions based on his requirements and then ask for a display of the corresponding chromatogram.

A method for the selection of the optimum mobile phase composition in liquid chromatography is known from A.C.J.H. Drouen et al.: "An Improved Optimization Procedure for the Selection of Mixed Mobile Phases in Reversed Phase Liquid Chromatography" , Chromatographia , Vol. 16, pages 48-52. This known method is an iterative optimization approach wherein in a first step, some chromatograms of a sample to be examined are measured at different solvent compositions and, based on the measured chromatograms, a so-called retention model is calculated which describes the chromatographic capacity factor as a function of solvent composition for the various components of the sample. From the thus obtained retention model, an overall resolution value is derived for each possible solvent composition, whereby the overall resolution value is a measure of the quality of the chromatographic separation for the respective solvent compositions. The chromatographer then initiates a new chromatographic separation with a solvent composition having a resolution value at or near the maximum of the optimal separation. The thus obtained new experimental data are used to refine the retention model and a new resolution value function is derived from the new retention model. The procedure can be repeated until the optimum mobile phase has been found.

The known optimization procedure is not satisfactory in all respects: Depending on the definition of the overall resolution value, the optimization procedure may lead to different results, i.e., to different solvent compositions which are regarded as optimal. Furthermore, the resolution value may not be sufficiently discriminating between different chromatographic separations, i.e., the resolution values associated with different separations are identical or very close to each other so that it is difficult to predict where optimal conditions are to be searched. It is tried to overcome these difficulties by defining the overall resolution in a way which is to provide a better discrimination, but even such a redefined resolution is not satisfactory for all separation problems. Consequently, there are differing optimization criteria in use which leads to a complication of the optimization procedure. Furthermore, the known method only offers a limited flexibility: if, for example, the chromatographer is interested in an optimal separation of only certain ones of the sample components, the known method, which is based on determining an overall resolution, is applicable only to a limited extent.

Relative to this prior art, it is an object of the invention to provide an apparatus and a corresponding method for optimizing liquid chromatographic separations which ensures more flexibility to the chromatographer in determining optimal conditions for a separation problem and is yet uncomplicated and which ensures a fast determination of such optimal conditions.

According to the invention, this object is achieved for an apparatus by the features of claim 1 and for a method by the features of claim 7.

According to an underlying principle of the invention, a liquid chromatograph additionally comprises means to calculate and to display the retention behaviour of the sample components in dependence of an optimization parameter, for example in dependence of the composition of the mobile phase. The calculations are based on a theoretical model as well as on actually performed chromatographic separations of the sample. The displayed retention model gives the user a first indication at which values of the optimization parameter optimal conditions could be expected. The user can then select from the displayed retention model by means of a marker, for example by means of a movable cursor, the optimization parameter or those parameters which appear to give optimum conditions. When the user has made such a selection, the corresponding chromatograms are calculated and displayed. The user can thus directly perceive the resulting chromatograms for various optimization parameters and can decide at one glance which chromatograms are best suited for his particular separation problem. For example, the user sees at once if all peaks are clearly separated from each other at a specific optimization parameter or if two or several peaks coincide. If the user is only interested in a separation of a few of the sample components, the invention permits to select the optimization parameter which gives the best resolution for just these peaks of interest, whereas the overall resolution of the chromatogram of all components need not be optimal. Furthermore, the user may select an optimization parameter for which the components of interest are separated in an acceptable, although not in the best possible manner, but which gives a short analysis time, shorter, for example, than for the separation which has the greatest overall separation of the peaks. According to this example, the user can design an optimum between peak separation and analysis time.

In accordance with a preferred embodiment of the invention, the optimization procedure starts with the recording of a chromatogram for at least two limiting values of the optimization parameter (e.g. composition of the mobile phase). Then, the retention for the individual components of the sample is derived, using the measured limiting values and a mathematical model for the retention, and a resulting plot of retention versus optimization parameter is displayed. Once the user has selected new parameter conditions from the displayed retention behaviour and the corresponding displayed chromatograms, an actual chromatographic separation is performed with these selected parameter conditions (e.g., a certain solvent composition) and the experimental data obtained in that chromatographic run are used to refine the mathematical model for the retention. This procedure can be repeated several times until satisfactory chromatograms result. It is understood that the expression "retention behaviour" used herein is to describe the time sequence of the elution of the sample components from the separation column; according to a preferred embodiment of the invention, this may be the retention time, but other modes of display would also be possible, for example a logarithmic representation of retention time. When the retention time is displayed on the display means, the advantage results that the user can directly recognize the analysis times for the chromatographic separations.

The invention provides great flexibility in selecting those chromatographic conditions which are considered as optimal for the respective separation problem, whereas in the prior art, the optimization is based on a single quality factor, whereby an undue simplification of the whole optimization problem is introduced which may lead to unsatisfactory optimization results. In contrast thereto, the apparatus of the invention provides a complete overview over the entire optimization problem, namely over the retention behaviour across the entire range of the optimization parameter and additionally derives and displays chromatograms selected from the displayed retention behaviour. In that way, the invention offers the possibility of direct visual comparison of "magnitudes" which give a much better description of the quality of the separation than the quality factors of the prior art, namely the chromatograms themselves.

According to an embodiment of the invention, the display of the retention behaviour not only comprises the display of the variation of the retention as a function of the optimization parameter, but also comprises the display of a calculated bandwidth for the individual sample components corresponding to the widths of the peaks in the chromatograms. Thus, it can already be taken from the displayed retention behaviour where sample components overlap.

In a further embodiment, a calculated separation quality curve can be displayed simultaneously with the retention behaviour and the chromatograms, thus providing an additional tool for selecting optimal conditions. It would also be possible to display several separation quality curves.

In the following, a embodiment of the invention is explained with reference to the drawings.

Figure 1 schematically depicts an apparatus according to the invention for optimizing liquid chromatographic separations.

Figure 2 illustrates a typical display of calculated retention data and chromatograms displayed during the optimization procedure.

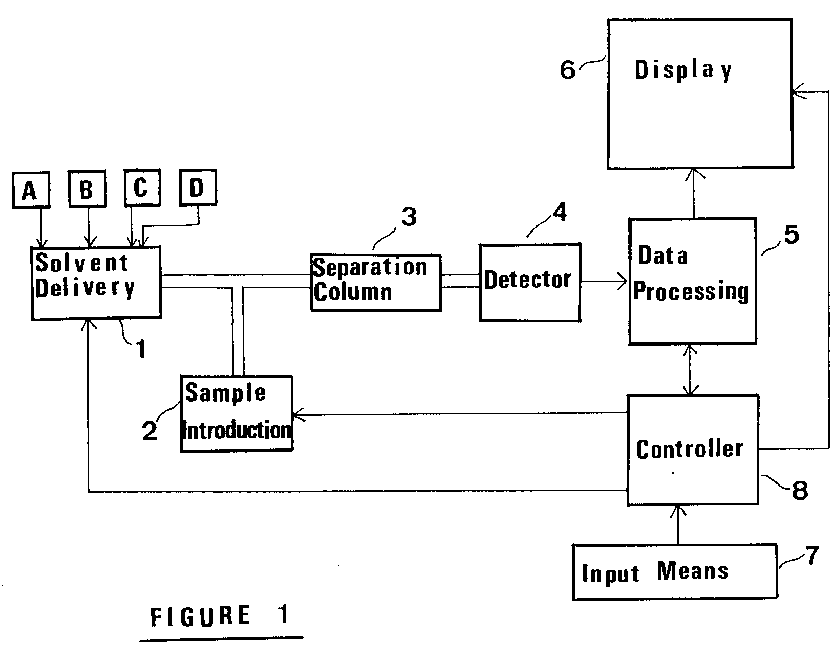

In Figure 1 is shown an apparatus according to the invention for performing liquid chromatographic separations and for optimizing such separations. The apparatus comprises a solvent delivery system 1 to which several solvent reservoirs A, B, C, D are connected. The solvents may be of any type used in liquid chromatography, for example water, methanol, acetonitrile, tetrahydrofuran. The solvent delivery system provides predetermined mixtures of the solvents A,B,C,D according to the control signals from a controller 8 and delivers at its outlet a high pressure stream of these mixtures. It is understood that the invention is not limited to four solvents, but that any number of solvent reservoirs may be connected to the solvent delivery system.

A sample introduction means 2 can be operated to inject predetermined amounts of sample into the solvent stream from the solvent delivery system 1. The sample is then transported under high pressure into the separation column 3 in which the various components are separated from each other and elute from the column 3 at different times. A detector 4 connected to the outlet of the column 3 provides output signals indicative of the components in the sample. The detector may be of any type used in liquid chromatography, such as a photometric detector, fluorescence detector, conductivity detector , electrochemical detector, or of any other type suitable for detecting the components of interest.

The output signal of the detector 4 is supplied to a data processing means 5 wherein a chromatogram is derived from the detector signals. The chromatogram, i.e., a graphical representation of detector output signal versus retention time, can be displayed on a display means 6, such as a cathode ray tube screen. The data processing means 5 is not only capable of deriving a chromatogram from the detector output signals but is also capable of calculating a chromatogram based on certain input parameters in a way which will be explained below in more detail. Such calculated chromatograms can also be displayed on the display means 6. Furthermore, calculated curves showing the retention behaviour for different components of the sample as a function of solvent composition as well as curves describing the chromatographic resolution as a function of solvent composition can be displayed. In order to perform these tasks, a graphics terminal may be used which, in order to better distinguish the various curves from each other may permit to display different colours.

An input means 7 connected to the controller 8 which in turn is connected to the display 6 gives a user the possibility to interact with the chromatographic system, i.e., to enter commands which the system is to execute or to request information from the system which is then displayed on the display means 6. The input means 7 may be, for example, a keyboard by which the user may type in commands and control one or several cursors on the display 6. It is understood that instead of a keyboard or in addition to it, any other input device can be used, such as a computer mouse, a trackball or a contact screen, whereby the user points on certain areas on the screen to input certain commands to the controller 8.

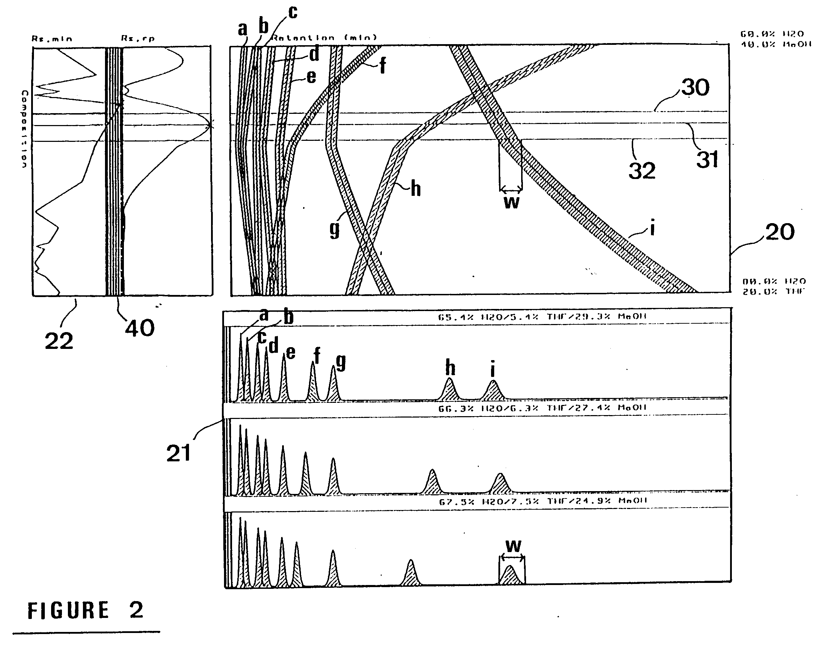

In the following, a typical optimization procedure is described with reference to Figure 2. Figure 2 is a graphical representation appearing on the display means 6 during the optimization procedure. The graphical representation comprises three main blocks 20, 21, 22 wherein different kinds of information are displayed which are used by the chromatographer for the optimization process.

In block 20 is displayed a derived retention model for the specific separation, i.e., a plot of retention versus solvent composition for the different components of the sample. The example shown relates to the separation of a sample of nine antiepileptic drugs. The nine shaded bands labelled with the letters a to i correspond to these nine components of the sample. The horizontal axis of the plot is the retention time, expressed for example in minutes, and the vertical axis is the solvent composition. In the example shown, the solvent composition varies between a first limiting value of 60 % water / 40 % methanol (upper end of vertical scale) and a second limiting value of 80 % water / 20 % tetrahydrofuran (lower end of vertical scale). The values in between these two limiting values represent the possible mixing ratios between these two limiting values. This can be illustrated such that one considers two solvent containers, one containing a mixture of 60 % water / 40 % methanol, and the other containing a mixture of 80 % water / 20 % tetrahydrofuran and that one produces the possible mixtures of the contents of these two containers to obtain the values on the vertical scale of block 20.

For example, the horizontal lines 30, 31, and 32 correspond to the three solvent compositions

   i) 65,4 % water ($H_2O$) ; 5,4 % tetrahydrofuran (THF); 29,3 % methanol (MeOH)

   ii) 66,3 % $H_2O$; 6,3 % THF ; 27,4 % MeOH

   iii) 67,5 % $H_2O$ ; 7,5 % THF ; 24,9 % MeOH

The solvent composition between the two limiting values can be described mathematically by a parameter X varying within a certain interval. The parameter X is used in the optimization process as will be explained below.

In the retention model shown in block 20, not only the retention times for the components a-i of the sample are displayed as a function of solvent composition, but also the bandwidths w for the components as a function of solvent composition. Thus, a cross section along a horizontal line in the retention model of block 20, such as lines 30, 31, or 32 corresponds to a chromatogram, i.e., a display of the chromatographic peaks as a function of retention time. In block 21 are displayed the three chromatograms resulting from horizontal cross sections along the lines 30, 31, 32, respectively. The positions of the lines can be selected by the user via the input means 7. Preferably, the lines can be moved in response to user control between the limiting values like a cursor, for example via corresponding keys on a keyboard or via a computer mouse, such that the momentary position of the cursor line is displayed on the screen 6, respectively.

The chromatogram corresponding to the momentary position of the cursor line is displayed in block 21. In the present example, the chromatograms corresponding to cursor lines 30, 31, 32 are displayed in the upper, mean, and lower third of block 21, respectively. The data corresponding to the displayed chromatograms are derived by the data processing means 5 from the data representing the retention model displayed in block 20. The displayed chromatograms show peaks labelled with the letters a to i according to the components in the sample as shown in the retention model in block 20. The chromatographer can thus directly perceive the chromatograms which would result at a certain solvent composition for the displayed retention model so that he can quickly decide which solvent composition would give the best solution to his separation problem.

In block 22 is displayed a separation quality factor for the chromatograms as a function of solvent composition. The separation quality factor is a measure of how well the individual components in the sample are separated from each other, or, stated in other words, a measure for the overall resolution of the chromatogram. There are a plurality of possibilities how the separation quality factor can be defined: In block 22 are shown two kinds of quality factors. The curve shown in the left half of block 22 displays the resolution of that peak pair in a chromatogram which is worst separated, whereby the resolution in this connection is defined as the quotient of the difference in retention times of these peaks and the sum of the widths of the corresponding chromatographic peaks. The vertical axis in the display of block 22 corresponds to the solvent composition and is identical to the vertical axis of the display of block 20. The horizontal axis indicates the magnitude of the quality factor.

In the right half of block 22 is displayed a second separation quality factor curve, wherein the quality factor is defined in a different way than in the left half. In that example, the quality factor is proportional to the product of all resolutions of adjacent peaks in the chromatogram, in accordance with equation (2) of the above mentioned article: A.C.J.H. Drouen et al.: "An Improved Optimization Procedure for the Selection of Mixed Mobile Phases in Reversed Phase Liquid Chromatography" , Chromatographia , Vol. 16, pages 48-52.

Like in the left half of block 22, the vertical axis corresponds to the solvent composition, the horizontal axis (starting from the middle of the block) indicates the magnitude of the quality factor. The horizontal cursor lines 30, 31, and 32 which have been described in connection with block 20 extend beyond block 20 into block 22 to guide the eye of the user in reading the separation quality factor for any solvent composition selected with the help of the line cursors 30, 31, or 32.

As can be seen from block 22, the separation quality factor curves in the left and in the right half differ from each other, in particular the maxima of these curves are at different locations, i.e., at different solvent compositions. The user may choose which separation quality curve he wants to take into consideration for selecting the solvent composition that he regards as optimal. Also shown in block 22 is a shaded band 40 which belongs to the separation quality curve in the left half and which serves to define a range for a certain minimum separation quality. The separation quality values at the intersection of the horizontal line cursors 30, 31, 32 with the separtion quality curves may be displayed on the screen.

In summary, the display according to Figure 2 shows the user in block 22 the calculated retention model, i.e. the dependence of the retention time on solvent composition and permits the user to mark certain solvent compositions for which the resulting chromatogram is then calculated and displayed in block 21 . Blocks 20 and 21 are aligned so that the user can easily associate the peaks of the displayed chromatograms with the bands shown in the retention model. Also displayed are one or more separation quality curves which are aligned with the retention model block 20 such that the user directly gets information about a separation quality value for a selected solvent composition. The bands in the retention model and the associated peaks in the chromatograms are coloured in the same way, respectively, so that identification of the various components in the retention model display and in the display of chromatograms is facilitated. Instead of different colours for the different sample components, it is also possible to use different shadings.

In the preceding, the graphical representations appearing on the display means 6 during the optimization process have been explained. In the following, it will be explained how the displayed data are obtained, in particular how the retention model displayed in block 20 is derived.

In a first step of the optimization procedure, the limiting or starting conditions are fixed. When the optimization parameter is the solvent composition as it is the case in the embodiment according to Figure 2, two limiting solvent compositions are determined between which the optimization parameter X can vary. In the present example, these limiting conditions are: 60% $H_2O$ / 40% MeOH , and 80% $H_2O$ / 20% THF. The limiting conditions can be established in different ways: One possible choice, corresponding to the embodiment of Figure 2, is to select two limiting solvent compositions such that the analysis times for the sample of interest, i.e., the retention times of the last sample components eluting from the separation column, respectively, are substantially equal.

When the limiting conditions have been fixed and the chromatograms resulting at these conditions have been recorded, the first retention model is calculated by the data processing means 5 and then displayed by the display means 6 in the block 20. In an embodiment of the invention, the calculation of the retention model is performed as follows:

First, it is assumed as a theoretical model that the natural logarithm of the chromatographic capacity factor $k_i$ for the sample component i varies linearly with the optimization parameter X (e.g. the solvent composition), i.e., the equation applies:

$$\ln (k_i) = a \cdot X + b \quad (1)$$

wherein a and b are constants. This model has been found to be an adequate description of the actual retention behaviour, but yet it is mathematically simple. For the capacity factor $k_i$ and the retention time $t_{ri}$ of the ith sample component the well-known relation applies:

$$t_{ri} = (1 + k_i) \cdot t_o \quad (2)$$

wherein $t_o$ is the so-called unretained time or void time of the column. Based on this theoretical model, a linear interpolation between the experimentally determined limiting conditions is performed. That means that in a plot ln k versus X the limiting conditions are connected by a straight line in order to obtain the values between the limiting values. The retention times for the individual sample components are calculated from the thus interpolated capacity factors using equation (2).

The data obtained in the just described way characterize the variation of the retention times for the individual sample components as a function of solvent composition and correspond to the center lines of the shaded bands diplayed in block 20. The widths w of the bands shown in block 20 are determined, according to this particular example, by the relationship w = 4 • $\sigma_i$ , whereby $\sigma_i$ is the standard deviation of a Gausssian peak and is given by the formula

$$\sigma_i = \frac{t_{ri}}{\sqrt{N}} \quad (3)$$

wherein $t_{ri}$ is the retention time of the ith sample compoment , and N is the plate number of the separation column which can be entered into the data processing means by the user. The chromatographic peaks a-h displayed in block 21 are Gaussian peaks having a standard deviation $\sigma_i$, that means that the full width of these peaks at a fraction of 0,607 of their total height is equal to $2\sigma_i$ . It is understood that the invention is not limited to Gaussian peaks, but that other peak shapes are possible and that the width of the peaks may be defined in a different manner.

Now, all data required for block 20 have been calculated so that they can be displayed. Then, the separation quality factor (or factors) are calculated and displayed in block 22. The user now has an overview over the retention model in the entire range of solvent compositions and gets an idea where optimum conditions can be expected. The display of the quality factor provides the user with an additional instrument to decide with which solvent compositions he could obtain the best results. When the user has positioned the horizontal cursors 30, 31, 32 at certain solvent compositions (vertical axis of block 20), the resulting chromatograms are calculated by the data processing means 5 and displayed in block 21. The use of several cursors 30, 31, 32 has the advantage that several chromatograms can be directly compared. The calculation and the display of chromatograms only requires a very short time period, it occurs almost instantaneously with the positioning of the cursor at a certain solvent composition so that the user can quickly scan all possible chromatograms.

In the left half of block 20, it can be seen that the quality curve has a sharp maximum above the cursor line 30 with a steep slope towards the upper end of block 22. Consequently, the quality of the separation would change drastically for optimization parameters in that area. It can also be seen that below the cursor line 30 the variation of the quality value is comparatively smooth, so that it is advisable to select a parameter value from this area. The invention thus also has the advantage that a kind of "robustness information" is provided to the user, i.e., information about the degree of the change (gradient) of the quality as a function of the optimization parameter.

When the user has determined which of the chromatograms fits his chromatographic needs best, he selects this chromatogram by entering a corresponding command via the input means 7. Then, the controller 5 initiates a chromatographic separation of the sample with a solvent composition which corresponds to the selected chromatogram. For example, if the user has decided from Figure 2 that the chromatogram in the mean third of block 21 (according to the position of cursor 31 in block 20) is the best one, he presses a certain key to select that chromatogram and to start a chromatographic run with that solvent composition. This chromatographic run produces new experimental data which are stored in the data processing means and which are used to calculate a refined retention model.

The new retention model is derived according to the same principle as explained above in connection with the first retention model, namely by linear interpolation of the natural logarithm of the retention factor $k_i$ as a function of the solvent composition X (see equation (1)). Thus, in a plot of ln ($k_i$) as a function of X, the experimentally determined points are piecewise connected by straight lines. The widths of the bands of the new retention model are calculated in accordance with equation (3). The new retention model is displayed in block 20 where it replaces the first retention model. Also calculated and displayed in block 22 are the separation quality factors. The user can position the cursors 30, 31, 32 at any desired place along the vertical axis of block 20 , causing the corresponding chromatogram to be calculated and displayed in block 21. The user views and compares the displayed chromatograms and selects the one which appears optimal to him.

Then, a new chromatographic separation of the sample is carried out with the solvent composition corresponding to the selected chromatogram. The new experimental data are used to again refine the retention model. Again, the user selects an optimal chromatogram, and the process starts anew. The above-described steps are repeated several times until the retention model does no longer change substantially, i.e., until the "true" retention model for the sample has been found. Typically, good results can be achieved after 3 to 5 runs. Thus, an iterative, interactive optimization process is provided which is fast and yet very flexible, because it enables the user to use his own judgement of what to consider as optimal conditions.

Instead of a Gaussian shape, the calculated chromatographic peaks might have another profile, which might even be asymmetric. It is also understood that the widths of the bands displayed in block 20 are not limited to the $4\sigma$ width according to equation (3). The width of the bands might be equal, for example, to the width of the corresponding chromatographic peaks at half of their maximum. Furthermore, various modifications to the specific display mode shown in Figure 2 are possible, if only the retention for the sample components is displayed as a function of an optimization parameter and the chromatograms corresponding to selectable parameters can be displayed.

## Claims

1. An apparatus for optimizing the liquid chromatographic separation of a sample with respect to an optimization parameter X (for example the composition of the mobile phase), comprising:

   - means (1, 2, 3, 4) for performing a liquid chromatographic separation of a sample which contains a plurality of sample components,

   - data processing means (5) for deriving the retention behaviour of sample components (a-i) as a function of the optimization parameter X, and for deriving the chromatograms corresponding to adjustable values (30, 31, 32) of the optimization parameter X,

   - display means (6) for displaying the derived retention behaviour (20) as a function of the optimization parameter X, and for displaying derived chromatograms (21) corresponding to selected values (30, 31, 32) of the optimization parameter X simultaneously with the derived retention behaviour (20), and

   - controller means (8) for initiating a liquid chromatographic separation of the sample at a specific value of the optimization parameter X,

wherein the data processing means (5) are operative to derive a new retention behaviour of the sample components, using the retention data measured in the previously performed liquid chromatographic separation as adjusting values for the new retention behaviour.

2. Apparatus according to claim 1, comprising marking means (30, 31, 32) displayed and movable on the display means (6) for selecting certain values of the optimization parameter X from the display of the retention behaviour (20), in response to commands entered via input means (7), wherein the positioning of the marking means (30, 31, 32) at a certain value of the optimization parameter causes the corresponding chromatogram to be derived by the data processing means (5) and to be displayed by the display means (6).

3. Apparatus according to claims 1 or 2, wherein the data processing means (5) are operative to derive from the retention behaviour separation quality factors for the displayed values of the optimization parameter X according to one or more predefined relationships, and wherein the display means (6) are operative to display a graphical representation (22) of the separation quality factor(s) simultaneously with the display of the retention behaviour (20).

4. Apparatus according to any of the preceding claims, wherein the display of the retention behaviour comprises a graphical representation of the retention time $t_{ri}$ of the sample components versus the optimization parameter X.

5. Apparatus according to any of the preceding claims, wherein the derived widths (w) of the chromatographic peaks (21: a-i) are a function of the retention time $t_{ri}$.

6. Apparatus according to any of the preceding claims, wherein for the deriving of the retention behaviour the following relationship is used:
$\ln (k_i) = a \cdot X + b$ , $k_i$ being the chromatographic capacity factor, X the optimization parameter, a and b constants,
and wherein derived retention data are obtained by interpolating between measured retention data.

7. A method for optimizing the liquid chromatographic separation of a sample with respect to an optimization parameter X (for example the composition of the mobile phase), comprising the steps of:

a) deriving the retention behaviour of sample components (a-i) as a function of the optimization parameter X,
b) displaying the derived retention behaviour (20) on a display means (6) as a function of the optimization parameter X,
c) deriving and displaying on the display means (6) simultaneously with the derived retention behaviour chromatograms (21) corresponding to selected values (30, 31, 32) of the optimization parameter X displayed on the display means (6),
d) performing a liquid chromatographic separation of the sample wherein the parameter X has been selected from the displayed values (30, 31, 32) to obtain experimental retention data, and
e) using the experimental retention data obtained in step d) to derive a new retention behaviour, and
f) performing steps b) to d) again, using the new retention behaviour.

**Patentansprüche**

1. Eine Vorrichtung zur Optimierung der flüssigchromatographischen Trennung einer Probe in bezug auf einen Optimierungsparameter X (beispielsweise die Zusammensetzung der mobilen Phase), die folgendes umfaßt:
   - Mittel (1, 2, 3, 4) zur Durchführung einer flüssigchromatographischen Trennung einer Probe, die eine Vielzahl von Probenbestandteilen enthalten,
   - Datenverarbeitungsmittel (5) zur Ableitung des Retentionsverhaltens von Probenbestandteilen (a bis i) in Abhängigkeit des Optimierungsparameters X und zur Ableitung der Chromatogramme, die einstellbaren Werten (30, 31, 32) des Optimierungsparameters X entsprechen,
   - Anzeigemittel (6) zur Anzeige des abgeleiteten Retentionsverhaltens (20) in Abhängigkeit des Optimierungsparameters X und zur Anzeige von abgeleiteten Chromatogrammen (21), die ausgewählten Werten (30, 31, 32) des Optimierungsparameters X entsprechen, wobei diese Anzeige gleichzeitig mit der Anzeige des abgeleiteten Retentionsverhaltens (20) erfolgt, und
   - Steuerungsmittel (8) zur Einleitung einer flüssigchromatographischen Trennung der Probe bei einem bestimmten Wert des Optimierungsparameters X,
   
   wobei die Datenverarbeitungsmittel (5) dazu dienen, ein neues Retentionsverhalten der Probenbestandteile abzuleiten und die Retentionsdaten, die bei der zuvor durchgeführten flüssigchromatographischen Trennung gemessen wurden, als Einstellwerte für das neue Retentionsverhalten verwendet werden.

2. Vorrichtung gemäß Anspruch 1, die Markierungsmittel (30, 31, 32) aufweist, die auf der Anzeigeeinrichtung (6) angezeigt werden und bewegt werden können, um bestimmte Werte des Optimierungsparameters X aus der Anzeige des Retentionsverhaltens (20) auszuwählen, und zwar als Antwort auf Befehle, die über die Eingabemittel (7) eingegeben wurden, wobei durch die Positionierung der Markierungsmittel (30, 31, 32) auf einem bestimmten Wert des Optimierungsparameters das entsprechende Chromatogramm von den Datenverarbeitungsmitteln (5) abgeleitet und von den Anzeigemitteln (6) angezeigt wird.

3. Vorrichtung gemäß Anspruch 1 oder 2, wobei die Datenverarbeitungsmittel (5) dazu dienen, von dem Retentionsverhalten, entsprechend einem oder mehreren vorgegebenen Verhältnissen, Trennungsqualitätsfaktoren für die angezeigten Werte des Optimierungsparameters X abzuleiten, und wobei die Anzeigemittel (6) dazu dienen, gleichzeitig mit der Anzeige des Retentionsverhaltens (20) eine graphische Darstellung (22) des(r) Trennungsqualitätsfaktors-(en) anzuzeigen.

4. Vorrichtung gemäß jedem der vorstehenden Ansprüche, wobei die Anzeige des Retentionsverhaltens eine graphische Darstellung der Retentionszeit $t_{ri}$ der Probenbestandteile über dem Optimierungsparameter X umfaßt.

5. Vorrichtung gemäß jedem der vorstehenden Ansprüche, wobei die abgeleiteten Breiten (w) der chromatographischen Spitzen (21: a bis i) eine Funktion der Retentionszeit $t_{ri}$ sind.

6. Vorrichtung gemäß jedem der vorstehenden Ansprüche, wobei zur Ableitung des Retentionsverhaltens das folgende Verhältnis zur Anwendung kommt: $\ln(k_i) = a \cdot X + b$, wobei $k_i$ der chromatographische Leistungsfaktor, X der Optimierungsparameter, a und b Konstanten sind, und wobei man abgeleitete Retentionsdaten durch Interpolation zwischen Retentionsmeßdaten erhält.

7. Ein Verfahren zur Optimierung der flüssigchromatographischen Trennung einer Probe in bezug auf einen Optimierungsparameter X (beispielsweise die Zusammensetzung der mobilen Phase), das folgende Schritte umfaßt:

a) Ableitung des Retentionsverhaltens von Probenbestandteilen (a bis i) in Abhängigkeit des Optimierungsparameters X,

b) Anzeige des abgeleiteten Retentionsverhaltens (20) auf einem Anzeigemittel (6) in Abhängigkeit des Optimierungsparameters X,

c) Ableitung und Anzeige von Chromatogrammen (21) auf den Anzeigemitteln (6), und zwar gleichzeitig mit dem abgeleiteten Retentionsverhalten, die ausgewählten, auf den Anzeigemitteln (6) angezeigten Werten (30, 31, 32) des Optimierungsparameters X entsprechen,

d) Durchführung einer flüssigchromatographischen Trennung der Probe, wobei der Parameter X aus den angezeigten Werten (30, 31, 32) ausgewählt wurde, um Retentions-Versuchsdaten zu erhalten, und

e) Verwendung der in Schritt d) erhaltenen Retentions-Versuchsdaten zur Ableitung eines neuen Retentionsverhaltens und

f) nochmalige Durchführung der Schritte b) bis d) unter Verwendung des neuen Retentionsverhaltens.

## Revendications

1. Appareil pour optimiser la séparation d'un échantillon en chromatographie liquide, par rapport à un paramètre d'optimisation X (par exemple la composition de la phase mobile), comportant:
   - un moyen (1, 2, 3,4) pour effectuer une séparation en chromatographie liquide d'un échantillon qui contient plusieurs composants d'échantillon.
   - un moyen de traitement de données (5) pour déduire le comportement de rétention de composants d'un échantillon (a-i) en fonction du paramètre d'optimisation X, et pour déduire les chromatogrammes correspondant aux valeurs réglables (30, 31, 32) du paramètre d'optimisation X.
   - un moyen d'affichage (6) pour afficher le comportement de rétention déduit (20) en fonction du paramètre d'optimisation X, et pour afficher les chromatogrammes déduits (21) correspondant aux valeurs sélectionnées (30, 31, 32) du paramètre d'optimisation X simultanément avec le comportement de rétention déduit (20), et
   - un moyen de contrôleur (8) pour commencer une séparation en chromatographie liquide de l'échantillon pour une valeur spécifique du paramètre d'optimisation X,

dans lequel le moyen de traitement de données (5) fonctionne en déduisant un nouveau comportement de rétention des composants de l'échantillon, en utilisant les données de rétention mesurées dans la séparation en chromatographie liquide effectuée précédemment, comme valeurs de réglage du nouveau comportement de rétention.

2. Appareil selon la revendication 1, comportant des moyens de marquage (30, 31, 32) affichés et mobiles sur le moyen d'affichage (6) pour sélectionner certaines valeurs du paramètre d'optimisation X d'après l'affichage du comportement de rétention (20), en réponse aux commandes entrées par l'intermédiaire d'un moyen d'entrée (7), dans lequel le positionnement des moyens de marquage (30, 31, 32) pour une certaine valeur du paramètre d'optimisation, provoque la déduction par le moyen de traitement de données (5), et l'affichage par le moyen d'affichage (6) du chromatogramme correspondant.

3. Appareil selon les revendications 1 ou 2, dans lequel le moyen de traitement de données (5) fonctionne en déduisant d'après le comportement de rétention, des facteurs de qualité de séparation pour les valeurs affichées du paramètre d'optimisation X selon une ou plusieurs relations prédéfinies, et dans lequel le moyen d'affichage (6) fonctionne en affichant une représentation graphique (22) du (des) facteur(s) de qualité de séparation simultanément avec le comportement de rétention (20).

4. Appareil selon l'une quelconque des revendications précédentes, dans lequel l'affichage du comportement de rétention comporte une représentation graphique du temps de rétention $t_{ri}$ des composants de l'échantillon en fonction du paramètre d'optimisation X.

5. Appareil selon l'une quelconque des revendications précédentes, dans lequel les largeurs déduites (w) des pointes chromatographiques (21: a-i) sont des fonctions du temps de rétention $t_{ri}$.

6. Appareil selon l'une quelconque des revendications précédentes, dans lequel la relation suivante est utilisée pour déduire le comportement de rétention:
ln $(k_i)$ = a.X + b, $k_i$ étant le facteur de capacité chromatographique, X le paramètre d'optimisation, a et b des constantes,
et dans lequel les données de rétention déduites sont obtenues par interpolation entre les données de rétention mesurées.

7. Procédé pour optimiser la séparation d'un échantillon en chromatographie liquide, par rapport à un paramètre d'optimisation X (par exemple la composition de la phase mobile), comportant les étapes de:
    a) déduction du comportement de rétention de composants d'un échantillon (a-i) en fonction du paramètre d'optimisation X,
    b) affichage sur un moyen d'affichage (6) du comportement de rétention déduit (20) en fonction du paramètre d'optimisation X,
    c) déduction et affichage sur le moyen d'affichage (6) simultanément avec les chromatogrammes de comportement de rétention déduits (21) correspondant aux valeurs sélectionnées (30, 31, 32) du paramètre d'optimisation X affiché sur le moyen d'affichage (6).
    d) exécution d'une séparation en chromatographie liquide de l'échantillon, dans laquelle le paramètre X a été choisi d'après les valeurs affichées (30, 31, 32) afin d'obtenir des données de rétention expérimentales, et
    e) utilisation des données de rétention expérimentales obtenues à l'étape d) pour déduire un nouveau comportement de rétention, et
    f) exécution à nouveau des étapes b) à d), en utilisant le nouveau comportement de rétention.

| A | B | C | D |

Solvent Delivery 1

Sample Introduction 2

Separation Column 3

Detector 4

Data Processing 5

Display 6

Controller 8

Input Means 7

FIGURE 1

FIGURE 2

EP 0 403 680 B1